# EUROPÄISCHE PATENTSCHRIFT

(11) **EP 1 429 647 B1**
(45) Veröffentlichungstag und Bekanntmachung des Hinweises auf die Patenterteilung: **14.12.2005**
(21) Anmeldenummer: 02800102.2
(22) Anmeldetag: 20.09.2002
(51) Int. Cl.: A47L 11/164, A47L 13/17, B24B 7/18, B24D 13/14

(54) **VERFAHREN ZUR SANIERUNG VON BESCHICHTETEN FUSSBÖDEN UND SANIERUNGSPAD**
METHOD FOR SANITATION OF COVERED FLOORS AND CLEANING PAD
PROCEDE DE RENOVATION DE SOLS REVETUS ET TAMPON DE NETTOYAGE

(30) Priorität: 29.09.2001 DE 10148355
(43) Veröffentlichungstag der Anmeldung: 23.06.2004
(73) Patentinhaber: ECOLAB INC., St. Paul, MN 55102-1390 (US)
(72) Erfinder: ROGMANN, Karl-Heinz, 40880 Ratingen (DE); FAUBEL, Heiko, 42929 Wermelskirchen (DE); FERNSCHILD, Hans-Leo, 41352 Korschenbroich (DE); BRUNZEL, Heike, 41542 Dormagen (DE)
(74) Vertreter: Sternagel, Fleischer, Godemeyer & Partner
(86) Internationale Anmeldenummer: PCT/EP2002/010569
(87) Internationale Veröffentlichungsnummer: WO 2003/028519

(56) Entgegenhaltungen:
- EP-A- 1 033 104
- DE-A- 4 216 410
- US-A- 3 527 001
- US-A- 5 096 610
- US-A- 5 804 541

## Beschreibung

Die vorliegende Erfindung beschäftigt sich mit chemisch-mechanischen Verfahren zur Sanierung von mit vernetzten Polymersystemen beschichteten Fußböden. Des weiteren sind ein Bodenpflegehilfsmittel und ein Reinigungspad Gegenstand der Erfindung.

Zum Schutz von Fußböden und zur Verbesserung der Reinigungsfähigkeit werden Bodenbeläge mit Polymeren beschichtet. Hierbei kann es sich sowohl um nachträglich aufgebrachte, als auch werkseitig applizierte Schutzfilme handeln. Als Schutz- bzw. Pflegefilme gelangen unvernetzte, mit Grundreinigern durch Abschrubben wieder entfernbare und vernetzte - also permanente - Polymere zum Einsatz. Je nach Belagstyp, z.B. Holz, Parkett, Stein, PVC, Gummi, Linoleum, Polylolefin etc., und Anforderungsprofil, werden geeignete Polymerbeschichtungssysteme ausgewählt. Hierbei handelt es sich um Ein- bzw. Mehrkomponentensysteme, überwiegend auf Basis von Acrylaten, Polyurethanen, Polyestern oder gegebenenfalls deren Mischungen.

Insbesondere in Europa wurde bisher zur Pflege von Fußböden eine naßchemische Behandlung mit wiederentfembaren Pflegemitteln vorgezogen. Diese wiederentfernbaren Pflegemittel sind jedoch gegenüber Desinfektionsmitteln, insbesondere solchen auf Basis von Alkylaminen, quartären Ammoniumverbindungen, Alkoholen, aber auch anderen anfällig und entsprechen nicht mehr den gestiegenen Ansprüchen der Verbraucher. Insbesondere Verfleckungen durch Haut- und Händedesinfektionsmittel wie weiß durch Alkohol/Wasser und farbig durch Markierungsstoffe sowie Vergilbungen durch Flächendesinfektionsmittel beispielsweise auf Basis von quartären Ammoniumverbindungen sowie aminischen Wirkstoffen führen immer noch zu Beanstandungen bei den Gebäude-Verantwortlichen aufgrund der optischen Beeinträchtigungen. Diese Probleme werden vor allem in Krankenhäusern beobachtet. Sie kommen aber auch in abgeschwächter Form in einer Umgebung vor, wo Reinigungs- und/oder Desinfektionsmittel verwendet werden, die die genannten Komponenten enthalten.

Im Gegensatz zu den wiederentfernbaren Pflegefilmen zeichnen sich die sogenannten permanenten Pflegefilme durch eine erhöhte Resistenz, insbesondere gegenüber Verfleckungen aus. Da die meisten Bodenbeläge Farbe und Design aufweisen, sind die Pflegefilme unpigmentiert. Sie trocknen nach Applikation überwiegend glänzend auf.

Permanentfilme, wie z.B. Autolacke, sind empfindlich gegenüber Kratzspuren. Deshalb werden oft wieder entfernbare Pflegefilme als sogenannte "Opferschicht" zusätzlich aufgebracht. Dies geschieht auch deshalb, um eine sehr lange Haltbarkeit und ein gutes Aussehen der Fußböden sicherzustellen. Wird nunmehr die Pflege des Opferfilms vernachlässigt, kann der darunterliegende Permanentfilm verkratzt werden. Die Kratzer, aber auch natürlicher Abrieb (Verschleiß), machen den Boden dann unansehnlich. Optisch zeigt sich dies in sogenannten matten Laufstraßen, die sich von der glänzenden Umgebung unschön abheben.

Im Gegensatz zu den klassischen Pflegemittelfilmen, die, wenn sie unansehnlich geworden sind, mit Grundreinigern leicht porentief entfernt werden können, lassen sich Permanentfilme nur durch mechanisches Schleifen entfernen. Kratzer oder Abnutzungserscheinungen können bei diesen Systemen nicht, wie sonst üblich, durch z.B. Highspeed-Cleaner oder Spraycleaner restauriert werden.

Die Verbreitung von Permanentpflegesystemen nimmt ständig zu. Die bisher auf dem Markt durchgeführten Verfahren können jedoch zum Teil auf elastischen Böden wegen der Schädigung des Belags nicht angewendet werden, bzw. erlangen aufgrund des hohen Aufwands am Markt keine Akzeptanz.

Man unterscheidet in der derzeitigen Praxis verschiedene Möglichkeiten zur Entfernung von Permanentpflegefilmen.

So werden auf harten Bodenbelägen, wie Holz, Parkett, Stein, Industrieböden, beschädigte Versiegelungen mit Spezialmaschinen und sehr abrasiven Schleifhilfsmitteln bis zum Grund abgeschliffen. Hierbei wird immer ein geringer Teil der Belagsoberfläche geopfert. Die dann rauhe Oberfläche muß durch aufwendiges Spachteln und Feinschleifen für eine Neubeschichtung vorbereitet werden, da sonst Unebenheiten, Rauhigkeiten und Schleifspuren sichtbar werden. Dieses Verfahren kann bei elastischen Böden wegen der irreversiblen Oberflächenschädigung nicht angewendet werden.

Demzufolge mußte man im Hinblick auf elastische Böden andere Verfahren heranziehen. So wurde versucht, für elastische Böden ein eigenes Sanierungskonzept zu entwickeln. Die Methode ist im Fachbuch "Gebäudereinigung" Verlag Rosemarie Lutz, 72581 Dettingen, auf Seite 172 beschrieben. Das Schleifverfahren erfolgt mit relativ schweren Ein- oder Mehrscheibenschrubbmaschinen mit untergelegten Nylon- oder Polyestergrundreinigungspads (schwarz, dunkelbraun, blau) bei einer Umdrehungszahl von 400 bis 900 upm. Die Maschine sollte eine Staubabsaugung enthalten.

Der Einsatzbereich beschränkt sich auf plane Fußbodenoberflächen. Böden mit nur geringfügigen Dellen stellen ein Problem dar. Entweder arbeitet man belagsschonend und bekommt die Rückstände in den "Tälern" nicht vollständig entfernt, oder man reinigt gründlich und schleift an den erhobenen Stellen den Boden an. Aufgrund der Steifigkeit der Pads und des Drucks der Maschine, sind sie nicht in der Lage, sich den Unebenheiten des Bodens anzupassen.

Bei der anschließenden Neueinpflege erhält man ein fleckiges, scheckiges Aussehen mit Zonen unterschiedlicher Glanzgabe. Dort, wo sich noch Reste befunden haben, glänzt der Bereich mehr, dort, wo der Belag angeschliffen wurde, befinden sich mattere Stellen, weil aufgrund der Aufrauhung mehr Beschichtungsmaterial in den Belag eindringt.

Ein weiteres Problem stellt der Staubanfall dar. Die meisten integrierten Staubabsaugungen sind nicht in der Lage, die anfallende Staubmenge zu bewältigen. Nicht abgesaugter Staub wird bei der überlappenden Arbeitsweise wieder vom Pad erfaßt und zum Teil in den Boden poliert und zum Teil in die Poren des Pads abgelagert, wodurch das Pad sich in kürzester Zeit zusetzt. Versuche mit feuchter Schleiftechnik zur Eindämmung der Staubproblematik sind mit den Padqualitäten nicht durchzuführen, da sich die Padscheiben noch schneller mit dem "Abriebbrei" zusetzen. Offene Padkonstruktionen, die das Zusetzen hinauszögem können, sind in der notwendigen Abrasivstufe am Markt nicht verfügbar.

Im Gegensatz zu den vernetzten Polymerbeschichtungen wird bei den unvernetzten klassischen Pflegemittelfilmen ein anderes Verfahren, ein sogenanntes Topstrippen, praktiziert: Hierbei wird der geschädigte Film mit einer Poliermaschine und untergelegtem Polier- bzw. Spraycleaner-Pad bei Umdrehungen von 200 bis 1.200 upm, je nach Abrasivstufe des Pads, abschnittsweise bearbeitet. Die zu bearbeitende Fläche wird vorher mit einem Spezialreinigungsmittel, dem sogenannten Topstripper, benetzt. Der Topstripper weicht den Film auf, löst in zum Teil an, so daß ein Teil hiervon beim Abfahren in die abgenutzten Zonen übertragen wird, wo die Masse dann gleichmäßig aufpoliert wird. Der Rest wird vom Pad aufgenommen. Die Pads müssen jedoch häufig gewechselt werden, weil auch hier die Aufnahmekapazität begrenzt ist. Gegebenenfalls sind die Bodenbereiche erneut zu behandeln.

Nach diesem Verfahren lassen sich sehr gleichmäßige Oberflächen erzielen, auch wenn der Boden nicht ganz eben ist, so daß nach Neubeschichtung ein einheitliches Bild entsteht. Nachteil dieses Verfahrens ist es, daß es nur bei unvernetzten klassischen Pflegefilmen angewendet werden kann. Stark abgenutzte Laufstraßen lassen sich mangels der zu geringen Abrasivität der Pads nicht bearbeiten, außer der Vorgang wird mehrmals wiederhott, was den Kostenrahmen für Sanierungsmaßnahmen sprengt.

Es besteht somit das Problem, daß für vemetzte Permanentpflegefilme auf elastischen Böden ein technisch einwandfreies Sanierungsverfahren, was vom Ergebnis und Aufwand her vom Verbraucher akzeptiert wird, fehlt. Demzufolge war es Aufgabe der vorliegenden Erfindung, ein entsprechendes Sanierungsverfahren zu entwickeln.

Gegenstand der vorliegenden Erfindung ist ein Verfahren zur Sanierung von mit vernetzten Polymersystemen beschichteten elastischen Fußböden durch Behandlung der Fußböden mit einem abrasiv wirkenden Körper unter mechanischem Druck und gewünschtenfalls Rotation, bei dem auf die Fußböden vor und/oder während der Behandlung mit dem besagten abrasiven Körper ein löse- und tensidhaltiges Mittel aufgebracht wird.

Vorzugsweise gilt für das erfindungsgemäße Verfahren, daß die in dem tensidhaltigen Mittel enthaltenen Tenside ausgewählt sind aus den Gruppen der nichtionischen, anionischen und amphoteren Tenside.

Tenside bewirken eine Änderung der Oberflächenspannung der fertigen Zusammensetzungen, unterstützen die Entfernung und die Suspendierung von Schmutz durch Emulgieren des Schmutzes. Es kann eine beliebige Anzahl von Tensiden verwendet werden, einschließlich organischer Tenside wie anionischer Tenside, kationischer Tenside, nichtionischer Tenside, amphoterer Tenside und von Gemischen davon.

Anionische Tenside sind im allgemeinen stärker hydrophob, so daß sie bei Reinigungsvorgängen wie dem Waschen harter Oberflächen und im Wäschereibetrieb zur Reinigung von Gegenständen mit Ölablagerungen eingesetzt werden können. Zu den für die Erfindung nützlichen Tensiden gehören unter anderem Sulfate, Sulfonate und Carboxylate, wie beispielsweise Alkylcarboxylatsalze. Beispiele für anionische Tenside sind Alkylsulfate und -sulfonate, Alkylethersulfate und-sulfonate, Alkylarylsulfate und -sulfonate, Arylsulfate und -sulfonate und sulfatierte Fettsäureester. Zu den bevorzugten anionischen Tensiden gehören Linearalkylsulfate und -sulfonate sowie Alkylbenzylsulfate und -sulfonate. Bevorzugter sind Alkylgruppen mit einer Kohlenstoffkettenlänge zwischen etwa C₈ und C₁₈; die bevorzugte Arylgruppe ist Benzyl.

Nichtionische Tenside, die sich allgemein als nützlich für die Erfindung erwiesen haben, sind Tenside, die Ethylenoxidanteile, Propylenoxidanteile und Gemische davon enthalten.

Zu den nichtionischen Tensiden, die für die Erfindung von Nutzen sind, gehören nichtionische Polyoxyalkylentenside wie C₈₋₂₂ Normal-Fettalkoholethylenoxide oder Propylenoxidkondensate (d.h. Kondensationsprodukte von einem Mol Fettalkohol mit 8 bis 22 Kohlenstoffatomen mit 2 bis 20 Mol Ethylenoxid oder Propylenoxid); Polyoxypropylen-Polyoxyethylen-Kondensate mit der Formel HO(C₂H₄O)ₓ(C₃H₆O)_{y}H wobei (C₂H₄O)ₓ mindestens 15 % des Polymers ausmacht und (C₃H₆O)_{y} 20 bis 90 % des Gesamtgewichts der Verbindung ausmacht; Alkylpolyoxypropylen-Polyoxyethylen-Kondensate mit der Formel RO-(C₃H₆O)ₓ(C₂H₄O)_{y}H wobei R eine C₁₋₁₅-Alkylgruppe bedeutet und x und y jeweils für eine ganze Zahl zwischen 2 und 98 stehen; Polyoxylalkylenglycole; mit Butylenoxid überbrücktes Alkoholethoxylat mit der Formel (R(OC₂H₄)_{y}(OC₄H₉)ₓOH, wobei R eine C-18-Alkylgruppe bedeutet, y für eine Zahl zwischen etwa 3,5 und 10 und x für eine ganze Zahl zwischen etwa 0,5 und 1,5 stehen sowie sogenannte endgruppenverschlossene Fettalkoholethoxylate; Benzylether von Polyoxyethylen und Kondensate von Alkylphenolen mit der Formel R(C₆H₄)(OC₂H₄)ₓOCH₂C₆H₅ wobei R eine C₆₋₂₀-Alkylgruppe und x eine ganze Zahl zwischen 5 und 40 bedeuten; und Alkylphenoxypolyoxyethylenethanole mit der Formel R(C₆H₄)(OC₂H₄)ₓOH, wobei R eine C₈₋₂₀-Alkylgruppe und x eine ganze Zahl zwischen 3 und 20 bedeuten.

Eine zweite bevorzugte Gruppe von nichtionischen Tensiden, die für die Erfindung nützlich und für andere Anwendungsfälle wünschenswert sind, bilden die Alkoholethoxylate. Diese nichtionischen Tenside werden durch Umsetzen eines Alkoholsalzes (RO⁻Na⁺), wobei R für eine Alkoholgruppe oder einen aromatischen Alkylanteil steht, mit einem Alkylenoxid gebildet. Bevorzugte Alkoxylate sind allgemein C₈₋₂₂-Alkylalkyloxylate, die folgende allgemeine Formel haben:

R-(OCH₂CH₂)ₙOH,

wobei der Wert von n zwischen 3 und 100 liegen kann. Statt dem

Zu den ebenfalls gut geeigneten Tensiden gehören die Aminoxidtenside. Geeignete Aminoxide haben die Formel 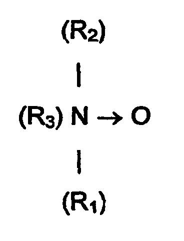 wobei R₁ ein C₈-C₂₀-Alkyl oder eine C₈-C₂₀-Alkylamido-C₂-C₅-Alkylgruppe bedeutet und R₂ und R₃ jeweils für ein niederes C₁-C₄-Alkyl oder ein niederes C₁-C₄-Hydroxyalkyl stehen. Vorzugsweise sind sowohl R₂ als auch R₃ Methyl, Ethyl oder 2-Hydroxyethyl. Bevorzugte Vertreter dieser Gruppe sind beispielsweise Lauryl(dimethyl)aminoxid (Ninox®L, Stephan Chemical Co., Northfield, IL), Cocodimethylaminoxid (Ninox®C), Myristyl(dimethyl)aminoxid (Ninox®M), Steary(dimethyl)aminoxid (Schercamox®DMS, Scher Chemicals, Inc., Clifton, N.J.), Coco(bis-hydroxyethyl)aminoxid (Schercamox®CMS), Talg(bis-hydroxyethyl)aminoxid und Cocoamidopropyl(dimethyl)aminoxid (Ninox®CA).

Bei dem erfindungsgemäßen Verfahren ist es weiterhin bevorzugt, daß das genannte Lösemittel vorzugsweise ausgewählt ist aus den Gruppen der alkoholischen Lösemittel, der acyclischen Glykolether und der Lösemittel auf Basis cyclischer Ether sowie Mischungen derselben.

Hinsichtlich des genannten Lösemittels gilt ein Gemisch aus einem alkoholischen Lösemittel und/oder einem acyclischen Glykolethern mit einem cyclischen Ether, vorzugsweise Butyrolacton 4 als besonders bevorzugt, wobei der Glykolether vorzugsweise ausgewählt ist aus den Methyl-, Ethyl-, Propyl-, Butyl- und Phenylethern von Ethylenglykol, Diethylenglykol, Propylenglykol und Di- und Tripropylenglykol.

Bevorzugt ist es für die Wirkung des erfindungsgemäßen Verfahrens, daß die in dem genannten tensidischen Mittel vorzugsweise als Lösemittel bevorzugt enthaltenen acyclischen Glykolether und die als Lösemittel enthaltenen cyclischen Ether zueinander im Gewichtsmengenverhältnis von 1 : 4 bis 4 : 1, vorzugsweise 2 : 1 bis 1 : 2 stehen.

Eine weitere bevorzugte Ausführungsform des erfindungsgemäßen Verfahrens ist es, wenn in dem heranzuziehenden tensidhaltigen Mittel das Gewichtsmengenverhältnis der Summe aller tensidischen Komponenten zu der Summe aller Lösemittelkomponenten zwischen 1 : 20 und 10 : 1, vorzugsweise zwischen 1 : 5 und 1 : 1 beträgt.

Bei dem erfindungsgemäßen Verfahren ist der genannte abrasiv wirkende Körper ein Reinigungspad, der bei Verwendung im Schiefer-Test einen Abriebwert zwischen 1 und 2 g ergibt. In den Beispielen wird noch genauer auf den Schiefer-Test und dessen Aussagekraft für die Abrasivität von Reinigungspads eingegangen.
Es ist besonders bevorzugt, wenn der genannte Reinigungspad Polymerfasern, vorzugsweise ausgewählt aus Nylon- und/oder Polyesterfasern enthält, die unterschiedlich lang geschnitten sind und in offener nicht gewebter Faserstruktur angeordnet sind.

Dabei sind vorzugsweise in den Reinigungspad Abrasivkörper eingestreut, die besonders bevorzugt mit einem dauerhaften Kleber fixiert sind.

In einer weiteren bevorzugten Ausführungsform des erfindungsgemäßen Verfahrens hat der Reinigungspad bei einer Dicke von 24 bis 32, vorzugsweise 26 bis 30 mm ein Gewicht von zwischen 1.300 und 1.800, vorzugsweise zwischen 1.450 und 1.550 g bezogen auf einen Quadratmeter.

Der in dem erfindungsgemäßen Verfahren zu verwendende Reinigungspad enthält vorzugsweise, bezogen auf den gesamten Reinigungspad, 30 bis 40 Gew.-%, vorzugsweise 33 bis 38 Gew.-% an Abrasivstoffen.

### Beispiele

In mehreren Versuchsserien wurde die Beeinflussung des Sanierungsergebnisses in Abhängigkeit von der verwendeten Maschine, der Art des Reinigungspads und der Zusammensetzung des tensidhaltigen Mittels untersucht.

Zur Durchführung der Versuche wurden schwarze PVC-Bahnen mit einer Länge von etwa 4 m und einer Breite von etwa 1 m zunächst naß grundgereinigt. Danach wurden die PVC-Bahnen folgendermaßen behandelt

Vorbereitung der Bahnen:
(1) vollflächige Befilmung mit einem Zwei-Komponenten-Polymer-Pflegefilm (15 g/m²
(2) Aufteilung der Bahnen in je drei gleich große Zonen (A, B, C)
(3) Erneute Befilmung der Zonen A und C, wie oben
(4) Befilmung der Zonen. A und C mit einem wiederentfernbaren Polymer-Pflegefilm (Opferschicht /15 g/m²)
(5) Alterung der Prüflinge; 2 Wochen, Trockenkammer 40 °C

Im Anschluß daran wurden die Versuche durchgeführt, wobei von Versuch zu Versuch unterschiedliche Bedingungen gewählt wurden. Dabei wurden die Versuche mit einem Maschinentyp, nämlich einer Einscheibenmaschine durchgeführt. Allerdings wurde das Schleifmaterial (Pad) und das tensidische Mittel (Topstripper) variiert. Die jeweiligen Bedingungen sind den Tabellen zu entnehmen.

Es sei außerdem darauf hingewiesen, daß vor Beurteilung des in den Tabellen enthaltenen Kriteriums "Erfolg der Sanierungsmaßnahme" nach der versuchsgemäßen Behandlung der Oberfläche mit Maschine/Pad/Chemie die Oberfläche durch Naßwischen/Saugen von Rückständen und Staub frei gemacht wurde und die oben genannten Flächen A und C mit einem Polymerpflegemittel (1,5 g/m²) beschichtet wurden.

Des Weiteren sei darauf hingewiesen, daß zur Prüfung des Bewertungskriteriums "Entfernbarkeit von Kratzspuren" wie folgt verfahren wurde:
Vor der Behandlung der Oberfläche mit Maschine/Pad/Chemie wurden in den oben genannten Flächen A und C mit einem Schleifpapier, Kömung 080, punktuell tiefe Kratzspuren erzeugt. Erst danach erfolgte die Behandlung mit Maschine/Pad/Chemie. Im Anschluß wurde die Oberfläche durch Naßwischen/Saugen von Rückständen und Staub frei gemacht und die Flächen A und C wurden mit einem Polymerpflegemittel (15 g/m²) beschichtet.

Bei der Beurteilung der erhaltenen Ergebnisse wurden folgende Prüfparameter und Bewertungskriterien herangezogen:

### Prüfparameter und Bewertungskriterien

### Schleifwirkung:

Maß für den mechanischen Abtrag von Pflegemittelfilmen durch Reinigerpads.

Prüfung und zusammenfassende Bewertung erfolgte visuell durch Praxistests und Versuche.
- 5: keine Schleifwirkung / kein Pflegefilmabtrag
- 4: minimale Schleifwirkung / Oberflächenmattierung des Pflegefilms
- 3: mäßige Schleifwirkung / zu langsamer Pflegefilmabtrag
- 2: ordentliche Schleifwirkung, jedoch noch zu viel Pflegefilmreste
- 1: gute Schleifwirkung, jedoch noch lokale Pflegemittelreste
- 0: sehr gute Schleifwirkung mit vollständiger Pflegefilmentfernung
- -1: zu starke Schleifwirkung, sichtbarer Angriff des Bodenbelages
- -2: deutliche Bodenbelagsschädigung

### Gleichmäßigkeit des Schleifprozesses

Die Gleichmäßigkeit des Pflegemittelabtrags ist von großer Bedeutung für den Sanierungsprozeß. Je nach Durchführung der Arbeiten, Methode, Pad-Art und Pad-Abrasivität, Umdrehungszahl der Maschine können punktuelle Unterschiede im Filmabtrag bzw. in der gesamten Restdicke des Films entstehen. Dies führt bei anschließender Beschichtung zu unterschiedlichen Glanzbereichen.

Prüfung und zusammenfassende Bewertung erfolgte visuell durch Praxistests und Versuche nach Testanordnung TA.
- 5: sehr unruhiges Oberflächenbild mit starken Glanzunterschieden
- 4: unregelmäßige Oberfläche
- 3: Oberfläche mit punktuellen Glanzunterschieden
- 2: leichte Beeinträchtigung der Oberfläche
- 1: geringe Beeinträchtigung der Oberfläche
- 0: gleichmäßige Oberfläche

### Kratzspuren

Zu abrasive und zu steife Pads hinterlassen nach dem Schleifen tiefe Kratzspuren im Pflegefilmsystem. Diese sind nach erneuter Beschichtung der Oberfläche deutlich sichtbar.

Prüfung und zusammenfassende Bewertung erfolgte visuell durch Praxistests und Versuche nach Testanordnung TA.
- 5: sehr tiefe Kratzspuren
- 4: tiefe Kratzspuren
- 3: Kratzspuren
- 2: leichte Kratzspuren
- 1: punktuelle Kratzspuren
- 0: keine sichtbaren Kratzspuren

### Entfernbarkeit von Kratzspuren und punktuellen Filmverletzungen

Beurteilt wird der Aufwand, der betrieben werden muß, um solche Kratzer oder Filmverletzungen zu beseitigen.

Prüfung und zusammenfassende Bewertung erfolgte visuell durch Praxistests und Versuche nach Testanordnung TC.
- 5: nicht akzeptabler Zeitaufwand
- 4: Beseitigung mit sehr hohem Zeitaufwand
- 3: Beseitigung mit deutlich erhöhtem Zeitaufwand
- 2: gute Beseitigung mit erhöhtem Zeitaufwand
- 1: gute Beseitigung mit leicht erhöhtem Zeitaufwand
- 0: leichte Beseitigung in angemessener Zeit

### Oberflächenegalisierung des abgenutzten Pflegefilms mit Topstrippern

Hierunter versteht man die Kombination von mechanischer und chemischer Wirkung, um, in einem Schleifprozeß mit Reinigungspads mit geringstem Aufwand, eine gleichmäßige beschichtungsfähige Oberfläche zu erzielen.

Prüfung und zusammenfassende Bewertung erfolgte visuell durch Praxistests und Versuche nach Testanordnung TA.
- 5: unbefriedigende Egalisierwirkung
- 4: geringe Egalisierwirkung
- 3: eingeschränkte Egalisierwirkung
- 2: gute Egalisierwirkung, jedoch deutlich aufwendigere Arbeitsweise
- 1: gute Egalisierwirkung, jedoch leicht aufwendigere Arbeitsweise
- 0: gute und schnelle Egalisierung der Oberfläche

### Verteilbarkeit von Topstrippern

Oberflächenbehandlungsmittel wie Topstripper müssen sich leicht und in dünnen Flüssigkeitsfilmen sowohl manuell als auch durch pumpsprayen auf dem Boden verteilen lassen, damit die Sanierungsarbeiten zügig und ohne Störung ablaufen können.

Prüfung und zusammenfassende Bewertung erfolgte durch Praxisanwendungen "wischen" und "pumpsprayen".
- 5: zu viskose Einstellung
- 4: eingeschränkte Verteilung durch pumpsprayen
- 3: eingeschränkte manuelle Verteilbarkeit
- 2: Verteilbarkeit mit leichten Störungen
- 1: gute Verteilbarkeit
- 0: sehr gute Verteilbarkeit

### Netzfähigkeit des Strippers

Oberflächenbehandlungsmittel wie Topstripper müssen eine gute Netzfähigkeit aufweisen, damit auch kritische Belagsoberflächen ausreichend benetzt werden.

Prüfung und zusammenfassende Bewertung erfolgte visuell beim Arbeiten in der Praxis sowie in der Testanordnung TA.
- 5: schlechte Benetzung auf allen Belägen
- 4: leichte Benetzungsprobleme auf allen Belägen
- 3: Benetzungsprobleme auf kritischen Belägen
- 2: leichte Benetzungsprobleme auf kritischen Belägen
- 1: gute Benetzung
- 0: sehr gute Benetzung

### Pufferwirkung des Strippers

Für den Naßschfeifprozeß bei Fußbodenpflegesystemen ist es besonders wichtig, daß der entstehende "Schleifbrei" eine besondere Konsistenz aufweist, die zum einen eine dämpfende Wirkung auf den Schleifprozeß ausübt, zum anderen aber noch so flüssig ist, daß sich die Struktur des Pads auch bei längerem Arbeiten nicht zusetzt und so das Pad nicht an Wirksamkeit verliert.

Prüfung und zusammenfassende Bewertung erfolgte visuell durch Praxisversuche und nach Testanordnung TA.
- 5: unbrauchbar, zu dünnflüssig/zähflüssig
- 4: eingeschränkt anwendbar
- 3: nur geringe Dämpfwirkung/verstärktes Zusetzen des Pads
- 2: etwas zu viskos/flüssig
- 1: eine Spur zu flüssig/viskos
- 0: ideale Verarbeitungskonsistenz

### Flächenleistung der Reinigerpads

Für den Dienstleister ist die Flächenleistung beim maschinellen Schleifen von erheblicher Bedeutung. Stäube beim trocknen Schleifen, Schleifschlamm beim nassen Schleifen können bei ungünstiger Vliesstruktur des Pads dieses zusetzen. Hierdurch verliert das Pad deutlich an Wirksamkeit und muß ausgetauscht sowie gereinigt werden. Deshalb ist die Vliesstruktur des Pads von großer Bedeutung.

Prüfung und zusammenfassende Bewertung erfolgte durch Praxistests und nach Testanordnung TA durch Flächenmessungen.
- 5: kleiner 5 m²
- 4: 5-15 m²
- 3: 16-30 m²
- 2: 31-60 m²
- 1: 61-100 m²
- 0: größer 100 m²

### Erfolg der Sanierungsmaßnahme

Der Erfolg einer Sanierungsmaßnahme von permanenten Pflegesystemen durch kontrolliertes Naßschleifen wird durch das optische Aussehen der Fußböden nach erneuter Befilmung bestimmt. Durch die Glanzgabe der Pflegefilme werden Fehler bei der Sanierung (tiefliegende Kratzspuren, unterschiedlich dicke Restfilmanteile) sichtbar. Dies zeigt sich in einer unruhigen Gesamtoptik mit wechselndem Glanzniveau sowie zur Intensivierung von Mängeln, wie z.B. Kratzern und Beschädigungen.
Prüfung und zusammenfassende Bewertung erfolgte visuell durch Praxistests und nach den Testanordnungen TA, TB und TC.
- 5: sehr fleckiges, unruhiges Glanzbild / sehr deutliche Kratzspuren
- 4: fleckiges, unruhiges Glanzbild / deutliche Kratzspuren
- 3: Oberfläche mit punktuellen Aufglänzungen / lokale Kratzspuren
- 2: leicht sichbare, punktuelle Aufglänzungen / Kratzer
- 1: minimale Störung der Oberfläche
- 0: einwandfreie, gleichmäßig glänzende Oberfläche

In einer ersten Versuchsserie wurden die so vorbereiteten Oberflächen einerseits bei unterschiedlichen Umdrehungszahlen [UpM=Umdrehungen pro Minute] mit einer Einscheibenmaschine behandelt. Andererseits wurden diese Versuche auch mit unterschiedlichen Pad-Typen durchgeführt.
Die ausgewählten Pad-Typen können einerseits anhand des Schiefer-Tests unter standardisierten Bedingungen in Pads mit unterschiedlichem Abrieberfolg unterteilt werden. Der Schiefer-Test liefert in erster Linie eine Aussage über die Aggressivität des Materials im Hinblick auf den erzeugten Abrieb. Hierfür wird eine neue Acrylplatte gewogen und auf einem Treibteller fixiert. Der Innenkem eines Pads wird auf einem Triebkopf montiert. Unter ständigem Wasserzulauf rotiert der Padkem mit 150 Umdrehungen pro Minute insgesamt 5000 mal über die Acrylplatte. Anschließend wird die Platte wieder gewogen. Die Differenz in Gramm ist das Maß für den Abrieb.

In allen bisherigen Versuchen hat es sich als vorteilhaft herausgestellt, wenn der Abrieb der Pads im Schiefer-Test zwischen 1 g und 2 g, besonders bevorzugt zwischen 1 g und 1,8 g lag. Ganz besonders bevorzugt werden Pads herangezogen, die im Schiefertest einen Abrieb von 1 g bis 2 g, vorzugsweise 1 g bis 1,8 g, und außerdem eine Faserkonstruktion aufweisen, die bei der Verwendung durch den vorliegenden Brei aus Abrieb und eingesetzten Chemikalien nicht verstopft. Mit anderen Worten, die Abriebwirkung des Pads im Schiefer-Test sollte auch nach Durchführung eines Schleifvorgangs vorhanden sein und vorzugsweise bei 0,6 g bis 2 g liegen.

Bei allen Versuchen dieser ersten Versuchsserie wurde zusätzlich zur mechanischen Behandlung ein handelsüblicher Topstripper eingesetzt. Dieser Topstriper enthielt etwa 4 Gew.-% C₁₂₋₁₈-Fettalkoholethoxylat (10 EO), 3 Gew.% Diethylenglykolmonobutyltether, 2 Gew.% Isopropanol, ca. 1 Gew.-% sonstige Additive (Farbe, Parfüm) und als Rest auf 100 Gew.-% VE-Wasser.

Die Ergebnisse aus dieser Versuchsserie sind aus Tabelle 1 zu entnehmen.

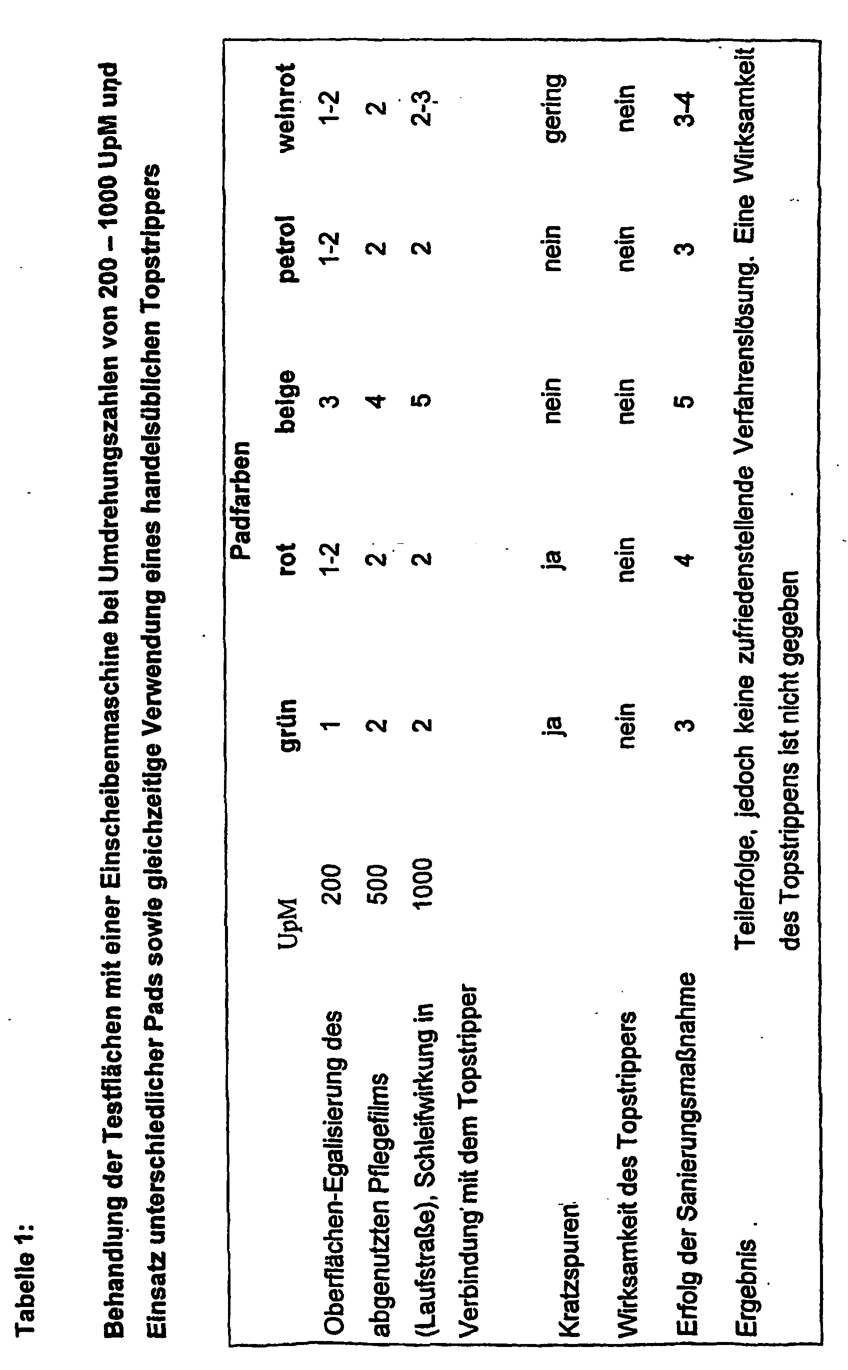

In einer zweiten Versuchsserie wurde ein Pad eingesetzt, der sich als am besten geeignet herausgestellt hatte.

Darüber hinaus wurde der Einfluß von handelsüblichen Strippern des Marktes im Vergleich zu erfindungsgemäßen Strippern untersucht. Die Zusammensetzungen der erfindungsgemäßen Stripper kann aus Tabelle 2 entnommen werden.

**Tabelle 2**

| **Formulierungen für erfindungsgemäße Topstripper**^{**1**} | | | | | | |
|---|---|---|---|---|---|---|
| **Bestandteile / Rohstoffe** | **E1** | **E2** | **E3** | **E4** | **E5** | **E6** |
| Alkansulfonat Natriumsalz | 8 | 0 | 2 | 0 | 0 | 0 |
| Cocamidopropyl Betaine | 0 | 8 | 0 | 4 | 0 | 0 |
| Oxoalkohol C13 + 8 EO | 0 | 0 | 6 | 0 | 0 | 0 |
| Fettalkohol C12-18 + 10 EO | 0 | 0 | 0 | 4 | 4 | 6 |
| Butyldiglycol | 8 | 0 6 | | 6 | 8 | 12 |
| Propylenglycolether | 0 | 6 | 0 | 0 | 0 | 0 |
| Isopropanol | 0 | 6 | 0 | 0 | 0 | 0 |
| Butyrolacton - 4 | 0 | 0 | 6 | 8 | 12 | 12 |
| ggf. Farbstoff, Duftstoffe | <1 | <1 | <1 | <1 | <1 | <1 |
| Rest auf 100 Gew.% Wasser add. | | | | | | |

| | | | | | | |
|---|---|---|---|---|---|---|
| ¹[alle Anteile in Gew.-%] | | | | | | |

Die Versuche wurden mit einer Einscheibenmaschine bei etwa 200 UpM durchgeführt. Ein entsprechender Stripper des Marktes enthält folgende Bestandteile.

| Stripper des Marktes | Gew.-% |
|---|---|
| Isotridecyl-Fettalkohol (+8 EO) | 1,5 |
| Benzylalkohol | 12,0 |
| Cumolsulfonat-Na | 2,0 |
| Triethanolamin | 2,0 |
| Farbe, Parfüm | < 1 |
| Wasser | ad 100 |

Die Ergebnisse aus dieser Versuchsserie sind in Tabelle 3 zusammengestellt

| Stripper des Marktes Bestandteile | Gew.-%. |
|---|---|
| C₁₂₋₁₈ -Fettalkohol (+ 2 PO + 4 EO) | 3,0 |
| Ethylenglykolmonobutylether | 10,0 |
| Cumolsulfonat-Na | 3,5 |
| Monophenylglykol | 3,0 |
| Na-tripolyphosphat | 1,5 |
| Ammoniak 21 % | 0,3 |
| Parfüm, Farbe | 4,1 |
| Wasser | ad 100 |

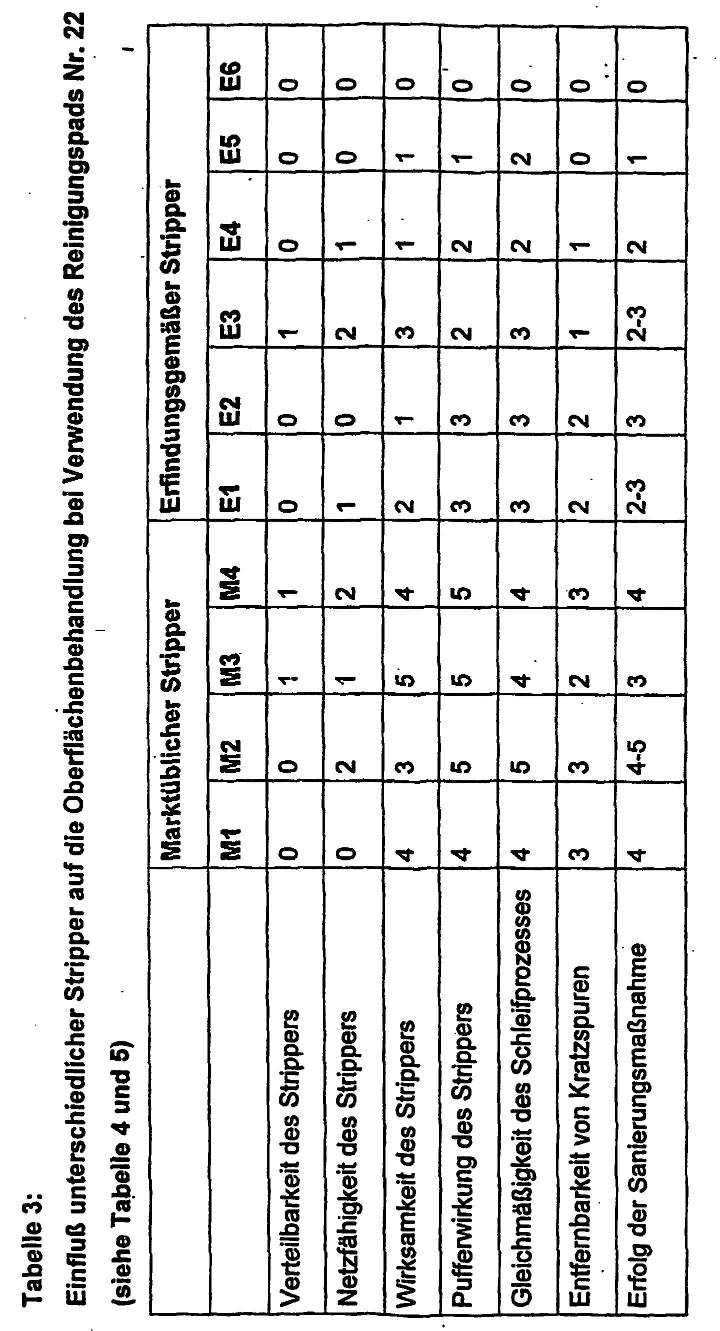

Dabei ist darauf hinzuweisen, daß bei den Versuchen das Reinigungspad eingesetzt wurde, das gemäß Tabelle 5 die besten Ergebnisse lieferte.

Die dritte Versuchserie hatte das Ziel, die Leistungsfähigkeit unterschiedlicher Pads in dem erfindungsgemäßen Verfahren zu untersuchen. Die Versuche wurden ebenfalls mit einer Einscheibenmaschine bei etwa 200 UpM durchgeführt und als Stripper wurde die Formulierung E6 verwendet. Die eingesetzten Pads sind in Tabelle 4 aufgelistet.

**Tabelle 4:**

| **Reinigungspads, die in der Versuchsserie 3 eingesetzt wurden** | | | | |
|---|---|---|---|---|
| **Nr.** | **Padfarbe** | **Material** | **Anbieter** | **Charakteristisches Merkmal Abriebwert nach Schiefer** |
| 1 | schwarz | Nylon | A | 4.2 g |
| 2 | schwarz | Nylon | B | 3,8 g |
| 3 | schwarz | Nylon | C | 4,6 g |
| 4 | schwarz | Nylon/Polyester | A | 3,9 g |
| 5 | schwarz | Nylon/Polyester | C | 3,2 g |
| 6 | schwarz | Polyester | A | 4,1 g |
| 7 | schwarz | Polyester | F | 4,5 g |
| 8 | dunkelbraun | Nylon/Polyester | A | 2,9 g |
| 9 | dundeklbraun | Nylon/Polyester | C | 3,7 g |
| 10 | dunkelbraun | Polyester | A | 3,8 g |
| 11 | blau | Nylon/Polyester | A | 2,6 g |
| 12 | blau | Polyester | A | 2,2 g |
| 13 | blau | Polyester | D | 1,8 g |
| 14 | grün | Nylon | A | 1,3 g |
| 15 | grün | Nylon/Polyester | C | 2,1 g |
| 16 | grün | Nylon/Polyester | E | 1,8 g |
| 17 | rot | Nylon/Polyester | A | 1,7 g |
| 18 | rot | Polyester | C | 0,6 g |
| 19 | rot | Polyester | D | 1,9 g |
| 20 | weinrot | Nylon/Polyester | D | 0,5 g |
| 21 | weinrot | Nylon/Polyester | E | 0,3 g |
| 22 | petrol | Nylon | A | 1,2 g |

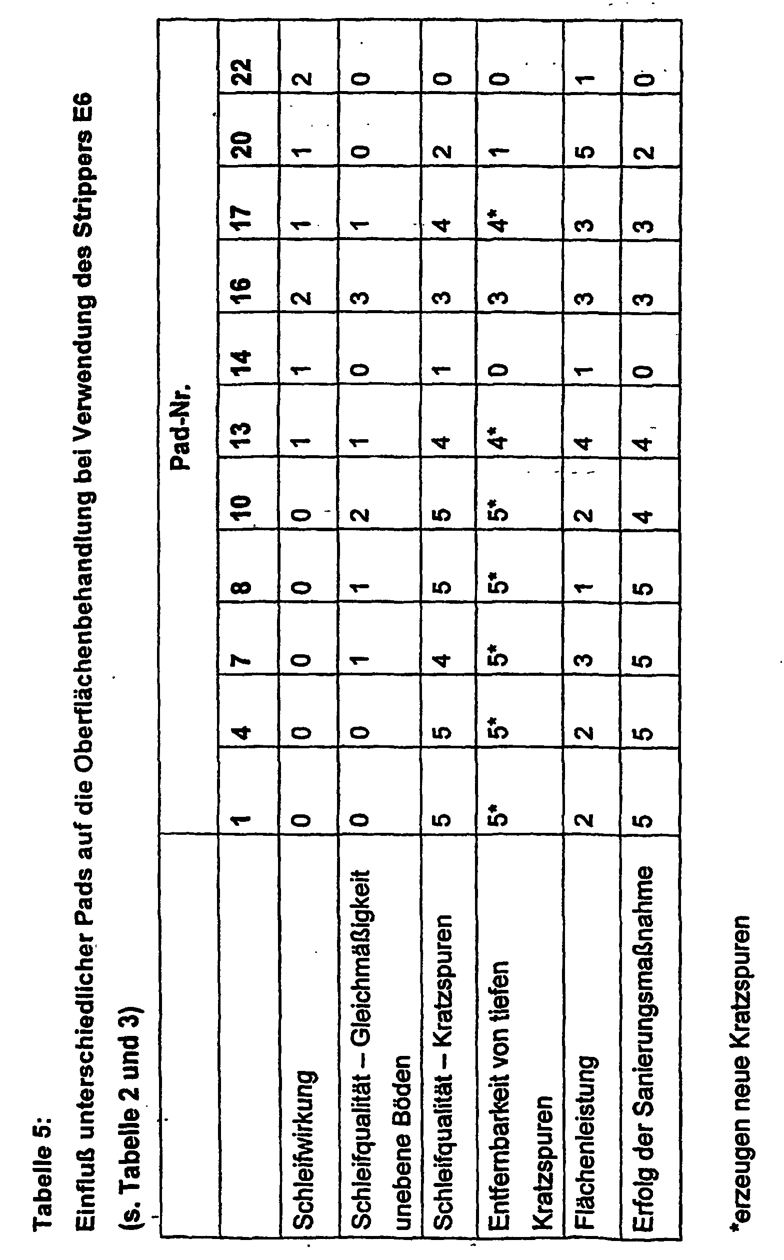

## Patentansprüche

1. Verfahren zur Sanierung von mit vernetzten Polymersystemen beschichteten elastischen Fußböden durch Behandlung der Fußböden mit einem abrasiv wirkenden Körper unter mechanischem Druck und gewünschtenfalls Rotation, **dadurch gekennzeichnet, dass** auf die Fußböden vor und/oder während der Behandlung mit dem besagten abravisen Körper ein löse- und tensidhaltiges Mittel aufgebracht wird, und dass der genannte abrasiv wirkende Körper ein Reinigungspad ist und im Schiefer-Test einen Abriebwert zwischen 1 und 2 g ergibt.

2. Verfahren nach Anspruch 1, **dadurch gekennzeichnet, dass** die in dem tensidhaltigen Mittel enthaltenen Tenside ausgewählt sind aus den Gruppen der nichtionischen, anionischen amphoteren Tenside.

3. Verfahren nach einem der Ansprüche 1 oder 2, **dadurch gekennzeichnet, dass** das genannte Lösemittel ausgewählt ist aus den Gruppen der alkoholischen Lösemittel, der acyclischen Glykolether und der Lösemittel auf Basis cyclischer Ether sowie Mischungen derselben.

4. Verfahren nach Anspruch 3, **dadurch gekennzeichnet, dass** das Lösemittel ein Gemisch aus einem alkoholischen Lösemittel und/oder einem acyclischen Glykolether mit einem cyclischen Ether, vorzugsweise Butyrolacton 4, ist.

5. Verfahren nach einem der Ansprüche 3 oder 4, **dadurch gekennzeichnet, dass** der Glykolether ausgewählt ist aus den Methyl-, Ethyl-, Propyl-, Butyl- und Phenylethem von Ethylenglykol. Diethylenglykol, Propylenglykol und Di- und Tripropylenglykol.

6. Verfahren nach einem der Ansprüche 3 bis 5, **dadurch gekennzeichnet dass** in dem genannten tensidhaltigen Mittel die acyclischen Glykolether und die Lösemittel auf Basis cyclischer Ether zueinander im Gewichtsmengenverhältnis von 1 : 4 bis 4 : 1, vorzugsweise 2 : 1 bis 1 : 2 stehen.

7. Verfahren nach einem der Ansprüche 1 bis 6, **dadurch gekennzeichnet, dass** das Gewichtsmengenverhältnis der Summe aller tensidischen Komponenten zu der Summe aller Lösemittelkomponenten in dem genannten tensidhaltigen Mittel zwischen 1 : 20 und 1 : 1, vorzugsweise zwischen 1 : 5 und 1 : 1 beträgt.

8. Verfahren nach Anspruch 1, **dadurch gekennzeichnet, dass** der Reinigungspad Polymerfasern, vorzugsweise ausgewählt aus Nylon- und/oder Polyesterfasern enthält, die unterschiedlich lang geschnitten sind und in offener, nicht gewebter Faserstruktur angeordnet sind.

9. Verfahren nach einem der Ansprüche 1 oder 8, **dadurch gekennzeichnet, dass** in den Reinigungspad Abrasivkörper eingestreut sind, die vorzugsweise mit einem dauerhaften Kleber fixiert sind.

10. Verfahren nach einem der Ansprüche 1, 8 oder 9, **dadurch gekennzeichnet, dass** das Gewicht der Faserkonstruktion des Reinigungspads bei einer Dicke von 24 bis 32, vorzugsweise 26 bis 30 mm zwischen 1.300 und 1.800, vorzugsweise zwischen 1.450 und 1.550 g bezogen auf einen Quadratmeter beträgt.

11. Verfahren nach einem der Ansprüche 9 oder 10, **dadurch gekennzeichnet, dass** der Anteil der genannten Abrasivkörper, bezogen auf den gesamten Reinigungspad, 30 bis 40 Gew.-%, vorzugsweise 33 bis 38 Gew.-% ausmacht.

## Claims

1. A method for repairing elastic floors coated with crosslinked polymer systems, said method involving treatment of the floors using a body with an abrasive effect under mechanical pressure and, if desired, rotation, **characterized in that** an agent containing solvent and surfactant is applied on the floors prior to and/or during the treatment with said abrasive body, and that said body with abrasive effect is a cleaning pad and affords an abrasive value between 1 and 2 g in the Schiefer Test.

2. The method according to claim 1, **characterized in that** the surfactants included in the surfactant-containing agent are selected from the groups of non-ionic, anionic amphoteric surfactants.

3. The method according to any of claims 1 or 2, **characterized in that** said solvent is selected from the groups of alcoholic solvents, acyclic glycol ethers, and solvents based on cyclic ethers and mixtures thereof.

4. The method according to claim 3, **characterized in that** the solvent is a mixture of an alcoholic solvent and/or of an acyclic glycol ether with a cyclic ether, preferably butyrolactone-4.

5. The method according to any of claims 3 or 4, **characterized in that** the glycol ether is selected from the methyl, ethyl, propyl, butyl and phenyl ethers of ethylene glycol, diethylene glycol, propylene glycol and di- and tripropylene glycol.

6. The method according to any of claims 3 to 5, **characterized in that** the acyclic glycol ethers and the solvents based on cyclic ethers are present in said surfactant-containing agent at a weight level ratio of from 1:4 to 4:1, preferably from 2:1 to 1:2.

7. The method according to any of claims 1 to 6, **characterized in that** the weight level ratio of the sum of all surfactant components to the sum of all solvent components in said surfactant-containing agent is between 1:20 and 1:1, preferably between 1:5 and 1:1.

8. The method according to claim 1, **characterized in that** the cleaning pad includes polymer fibers, preferably selected from nylon and/or polyester fibers, cut into varying lengths and arranged in an open, non-woven fiber structure.

9. The method according to any of claims 1 or 8, **characterized in that** the cleaning pad has abrasive bodies interspersed therein, preferably fixed by means of a permanent adhesive.

10. The method according to any of claims 1, 8 or 9, **characterized in that** the weight of the fiber construction of the cleaning pad, at a thickness of from 24 to 32 mm, preferably from 26 to 30 mm, is between 1,300 and 1,800 g, preferably between 1,450 and 1,550 g, relative to one square meter.

11. The method according to any of claims 9 or 10, **characterized in that** the proportion of said abrasive bodies, relative to the overall cleaning pad, is from 30 to 40 wt.-%, preferably from 33 to 38 wt.-%.

## Revendications

1. Procédé pour rénover des sols élastiques enduits de systèmes de polymères réticulés, par traitement des sols avec un corps à action abrasive sous pression mécanique et éventuellement avec rotation,
**caractérisé en ce qu'**
on dépose sur les sols, avant et/ou pendant le traitement avec le corps abrasif précité, un agent solvant et tensio-actif, et le corps à action abrasive précité est un tampon de nettoyage et donne à l'essai Schiefer, un coefficient d'abrasion entre 1 et 2 g.

2. Procédé selon la revendication 1,
**caractérisé en ce que**
les tensio-actifs contenus dans l'agent contenant des tensio-actifs sont choisis dans les groupes des tensio-actifs amphotères non ioniques et anioniques.

3. Procédé selon une des revendications 1 ou 2,
**caractérisé en ce que**
le solvant est choisi dans les groupes des solvants alcooliques, des glycoléthers acycliques et des solvants à base d'éthers cycliques ainsi que de leurs mélanges.

4. Procédé selon la revendication 3,
**caractérisé en ce que**
le solvant est un mélange d'un solvant alcoolique et/ou d'un glycoléther acyclique avec un éther cyclique, de préférence le butyrolactone 4.

5. Procédé selon une des revendications 3 ou 4,
**caractérisé en ce que**
le glycoléther est choisi parmi les méthyl, éthyl, propyl, butyl et phényl-éthers d'éthylène glycol, de diéthylène glycol, de propylène glycol et de di-et-tripropylène glycol.

6. Procédé selon une des revendications 3 à 5,
**caractérisé en ce que**
dans l'agent tensio-actif, les glycoléthers acycliques et les solvants à base d'éthers cycliques sont entre eux dans un rapport de quantités en poids de 1 : 4 à 4 :1, de préférence de 2 :1 à 1 : 2.

7. Procédé selon une des revendications 1 à 6,
**caractérisé en ce que**
le rapport de quantités en poids liant la somme de tous les constituants tensio-actifs à la somme de tous les constituants solvants contenus dans l'agent contenant des tensioactifs précité est compris entre 1 : 20 et 1 : 1, de préférence entre 1 : 5 et 1 : 1.

8. Procédé selon la revendication 1,
**caractérisé en ce que**
le tampon de nettoyage contient des fibres de polymères, de préférence choisies parmi les fibres de nylon et/ou de polyester qui sont coupées en différentes longueurs et sont disposées en une structure fibreuse ouverte, non tissée.

9. Procédé selon une des revendications 1 ou 8,
**caractérisé en ce que**
dans le tampon de nettoyage, sont dispersés des corps abrasifs qui sont de préférence immobilisés avec une colle durable.

10. Procédé selon une des revendications 1, 8 ou 9,
**caractérisé en ce que**
le poids de la structure fibreuse du tampon de nettoyage, est compris entre 1.300 et 1.800, de préférence entre 1.450 et 1.550 g par mètre carré pour une épaisseur de 24 à 32, de préférence de 26 à 30 mm.

11. Procédé selon une des revendications 9 ou 10,
**caractérisé en ce que**
la proportion des corps abrasifs précités, rapportée à l'ensemble du tampon de nettoyage, représente 30 à 40 % en poids, de préférence 33 à 38 % en poids.
